# EUROPÄISCHE PATENTSCHRIFT

(11) **EP 4 065 868 B1**
(45) Veröffentlichungstag und Bekanntmachung des Hinweises auf die Patenterteilung: **25.02.2026**
(21) Anmeldenummer: 20838401.6
(22) Anmeldetag: 17.12.2020
(51) Int. Cl.: F16K 1/46, F16K 3/24, F16K 5/04, F16K 25/00, F16K 39/02, F01D 17/14, F16K 1/32, B22F 5/00, B23K 35/02, B33Y 80/00, F16J 15/447, F16J 1/00, F16J 15/44, F16J 15/56, F01D 11/00, F01D 11/02

(54) **VENTILANORDNUNG UND FLUIDSTROMKONTROLLELEMENT**
VALVE ARRANGEMENT AND FLUID FLOW CONTROL ELEMENT
AGENCEMENT DE SOUPAPES ET ÉLÉMENT DE RÉGULATION DE DÉBIT DE FLUIDE

(30) Priorität: 20.12.2019 DE 102019220439
(43) Veröffentlichungstag der Anmeldung: 05.10.2022
(73) Patentinhaber: Siemens Energy Global GmbH & Co. KG, 81739 München (DE)
(72) Erfinder: CHRIST, Martin, 91580 Petersaurach (DE); STARK, Mathias, 91719 Heidenheim (DE)
(86) Internationale Anmeldenummer: PCT/EP2020/086681
(87) Internationale Veröffentlichungsnummer: WO 2021/122926

(56) Entgegenhaltungen:
- EP-A1- 3 254 001
- EP-A2- 0 828 102
- WO-A1-2011/029849
- WO-A1-2019/177831
- DE-A1- 19 636 674
- DE-A1- 3 330 852
- DE-U1- 202006 018 786
- US-A- 4 292 936
- US-A- 6 030 174
- US-A1- 2019 024 804

## Beschreibung

Die vorliegende Erfindung betrifft eine Ventilanordnung. Ferner betrifft die vorliegende Erfindung ein Fluidstromkontrollelement umfassend eine erfindungsgemäße Ventilanordnung. Ferner betrifft die vorliegende Erfindung eine Strömungsmaschinenanlage umfassend eine Ventilanordnung und/oder ein Fluidstromkontrollelement. Ferner betrifft die vorliegende Erfindung ein Verfahren zur Bereitstellung einer derartigen Ventilanordnung oder eines derartigen Fluidstromkontrollelements. Ferner betrifft die vorliegende Erfindung die Verwendung einer Ventilanordnung oder eines Fluidstromkontrollelements.

Strömungsmaschinenanlagen sind ein wichtiger Bestandteil der heutigen Industrie und sind beispielsweise bei der Energieerzeugung von besonderer Bedeutung. Hierbei haben derartige Strömungsmaschinenanlagen vielfältige Weiterentwicklungen durchlaufen. Auch sehr etablierte Systeme wie Dampfturbinenanlagen sind hierbei beständig Thema von Weiterentwicklungen und neuen Anforderungen ausgesetzt. Beispielsweise resultieren neue Herausforderungen wie der Ausgleich der schwankenden Einspeisungen von erneuerbaren Energiequellen wie Windenergie und Solarenergie oder auch verschärfte Anforderungen hinsichtlich Arbeitssicherheit und verstärkter Kostendruck in einem beständigen Bedarf auch derartige Systeme immer weiter zu optimieren.

Beispielsweise wird in der WO 2019/177831 A1 ein Druckregler umfassend einen Ventilkörper mit einem Fluideinlass und einem Fluidauslass.

Die EP 0 828 102 A2 betrifft ein Dampfstellventil für Dampfturbinen mit einem im Ventilgehäuse angeordneten Ventileinsatz, mit einer in einer Dichtungspackung geführten Ventilspindel, mit einem im Ventileinsatz gleitenden Ventilkegel und mit einem im Ventilgehäuse angeordneten Ventildiffusor und einem hydraulischen Antrieb.

Beispielsweise ist hierbei der Wunsch nach einem einfach regelbaren und wartungsfreundlicheren Regelungssystem des Fluidstroms der Strömungsmaschinenanlagen vorhanden. Gleichzeitig muss hierbei jedoch die Sicherheit insbesondere für die Mitarbeiter zumindest beibehalten werden. Vorzugsweise soll auch hierbei eine Verbesserung erzielt werden. Dies ist von besonderer Bedeutung für Systeme wie die Dampfturbinenanlagen, bei denen ein Fluidstrom unter hohem Druck eingesetzt wird. Gleichzeitig soll das System jedoch möglichst zuverlässig und wartungsarm sein, wobei auch ein hoher Fertigungsaufwand resultierend in hohen Ersatzteilkosten und erhöhtem Risiko von Produktionsmängeln möglichst minimiert werden soll.

Diese Aufgaben werden durch die Vorrichtungen, das Verfahren und die Verwendung, wie hierin beschrieben und in an Ansprüchen ausgeführt, gelöst. Die abhängigen Ansprüche und weitere Beschreibung enthalten vorteilhafte Ausgestaltungen der Erfindung, welche weitere Vorteile bereitstellen, die auch zusätzliche Probleme lösen können.

Gemäß einem Aspekt betrifft die vorliegende Erfindung eine Ventilanordnung zur Regelung eines Fluidstroms umfassend ein stationäres Element und ein bewegliches Element, wobei das stationäre Element einen Hohlraum aufweist, in dem sich das bewegliche Element bewegt, wobei das bewegliche Element geeignet ist entlang einer ersten Achse translatorisch innerhalb des Hohlraums des stationären Elements bewegt zu werden, wobei das bewegliche Element ein Kolbenelement und eine stabförmiges Koppelelement umfasst, wobei das Kolbenelement eine Außenseite parallel zur ersten Achse aufweist, wobei die Ventilanordnung ein Dichtungselement wie beispielsweise eine Labyrinthdichtung an der Außenseite des Kolbenelements umfasst, das derart gestaltet ist, dass ein Durchfluss des Fluidstroms zwischen dem stationärem Element und der Außenseite des Kolbenelements verringert oder verhindert, vorzugsweise verhindert, wird, wobei das Kolbenelement eine Kontaktkante aufweist, die geeignet ist einen Ventilsitz zu kontaktieren, wobei das Kolbenelement gegenüber der Kontaktkante eine Rückseite aufweist, wobei das Koppelelement an der Rückseite des Kolbenelements befestigt ist, wobei das Dichtungselement derart ausgestaltet ist, dass es mindestens eine Einbuchtung der Außenseite der Seitenwand Kolbenelements in Richtung der ersten Achse umfasst, wobei die mindestens eines Einbuchtung eine Oberfläche aufweist, wobei die Oberfläche der mindestens einen Einbuchtung zumindest teilweise aus einem ersten Material besteht, wobei der Großteil, vorzugsweise mindestens 60 Gew.-%, mehr bevorzugt mindestens 75 Gew.-%, noch mehr bevorzugt mindestens 90 Gew.-%, des beweglichen Elements aus einem zweiten Material besteht, wobei das erste Material sich vom zweiten Material unterscheidet, und wobei das erste Material und das zweite Material aus der Gruppe bestehend aus Metallen und Metalllegierungen ausgewählt wird, wobei die Oberfläche von mindestens einer Einbuchtung des Dichtungselements vollständig aus dem ersten Material besteht, wobei das Kolbenelement eine auf der Seite der Kontaktkante offene Topfform aufweist, wobei das Kolbenelement gegenüber der Kontaktkante eine Rückwand aufweist, wobei die Rückwand mindestens einen Durchgang aufweist. Bei der Berechnung der Gewichtsanteile wird auf das Gesamtgewicht des beweglichen Elements abgestellt. Nicht eingerechnet werden hierbei beispielsweise lösbar mit dem beweglichen Element verbundene Teile wie ein Kolbenring, auch wenn dieser beispielsweise in einer der Einbuchtungen angeordnet ist. Die entsprechenden Einbuchtungen erstrecken sich um das bewegliche Element typischerweise auf einer Ebene senkrecht zur ersten Achse. Es sind auch komplexe Formen denkbar wie Einbuchtungen, welche sich nicht um das komplette bewegliche Element erstrecken. Hierbei ist beispielsweise eine erste Einbuchtung an einer oder mehr Stellen unterbrochen und in Richtung parallel zu der ersten Achse findet sich neben der Unterbrechung der ersten Einbuchtung eine zweite Einbuchtung, welche diese Unterbrechung zumindest teilweise ausgleicht und die Dichtungswirkung des Dichtungselements gewährleistet. Typischerweise ist es jedoch bevorzugt, dass sich die Einbuchtungen vollständig um das bewegliche Element erstrecken. Die ist ein besonders einfacher Aufbau, der ein zuverlässige Dichtungswirkung bereitstellt.

Gemäß einem weiteren Aspekt betrifft die vorliegende Erfindung Fluidstromkontrollelement umfassend eine erfindungsgemäße Ventilanordnung, eine Fluidstromleitung und einer Fluidstromeintrittsöffnung umfassend einen Ventilsitz innerhalb der Fluidstromleitung, wobei der Ventilsitz geeignet ist die Kontaktkante der Ventilanordnung zu kontaktieren.

Gemäß einem weiteren Aspekt betrifft die vorliegende Erfindung eine Strömungsmaschinenanlage umfassend mindestens eine erfindungsgemäße Ventilanordnung und/oder ein erfindungsgemäßes Fluidstromkontrollelement.

Gemäß einem weiteren Aspekt betrifft die vorliegende Erfindung ein Verfahren zur Bereitstellung oder Instandsetzung einer erfindungsgemäßen Ventilanordnung oder eines erfindungsgemäßen Fluidstromkontrollelements, wobei das erste Material mittels eines additiven Fertigungsverfahrens wie dem Laserauftragsschweißen auf das zweite Material des beweglichen Elements aufgebracht wird.

Gemäß einem weiteren Aspekt betrifft die vorliegende Erfindung ein Verfahren zur Bereitstellung oder Instandsetzung einer Strömungsmaschinenanlage, vorzugsweise einer Dampfturbinenanlage, wobei das Verfahren den Einbau oder die Instandsetzung einer erfindungsgemäßen Ventilanordnung oder eines erfindungsgemäßen Fluidstromkontrollelements umfasst.

Gemäß einem weiteren Aspekt betrifft die vorliegende Erfindung eine Verwendung einer erfindungsgemäßen Ventilanordnung oder eines erfindungsgemäßen Fluidstromkontrollelements zur Regelung des Fluidstroms einer Strömungsmaschinenanlage, vorzugsweise einer Dampfturbinenanlage. Der Begriff "Regelung" im Sinne der vorliegenden Erfindung bezeichnet die Einstellung eines gewünschten Fluidstroms sowie insbesondere das Blockieren des Fluidstroms.

Für ein vollständigeres Verständnis der vorliegenden Erfindung wird auf die nachfolgende ausführliche Beschreibung und der in Verbindung hiermit beschriebenen Abbildungen verwiesen. Die Abbildungen sind hierbei jedoch nur als Verdeutlichung der Erfindung zu verstehen und stellen nur besonders bevorzugte Ausführungsformen und keine Einschränkung der Erfindung dar.

Abbildung 1 zeigt einen schematischen Querschnitt eines erfindungsgemäßen Fluidstromkontrollelements als Seitenansicht.

Abbildung 2 zeigt einen schematischen Querschnitt des in Abbildung 1 dargestellten erfindungsgemäßen Fluidstromkontrollelements als 3D-Ansicht.

Abbildung 3 zeigt schematischen Querschnitt eines ähnlichen Fluidstromkontrollelements mit gebräuchlicher Ventilanordnung als Seitenansicht.

Abbildung 4 zeigt eine schematische Seitenansicht eines Kolbenelements bestehend aus dem zweiten Material.

Abbildung 5 zeigt einen schematischen Querschnitt des Kolbenelements aus Abbildung 4 bestehend im Wesentlichen aus dem zweiten Material, wobei in die in Abbildung 4 dargestellte Einbuchtung das erste Material aufgebracht wurde.

Abbildung 6 zeigt einen schematischen Querschnitt des Kolbenelements aus Abbildung 5, wobei in das erste Material und zweite Material die Einbuchtungen mittels eines spanenden Fertigungsschrittes eingebracht wurden.

Abbildung 7 zeigt einen schematischen Querschnitt des Kolbenelements mit den erfindungsgemäßen Einbuchtungen aus einer alternativen erfindungsgemäßen Ausführungsform.

Gemäß einem Aspekt betrifft die vorliegende Erfindung die vorgenannten Ventilanordnung.

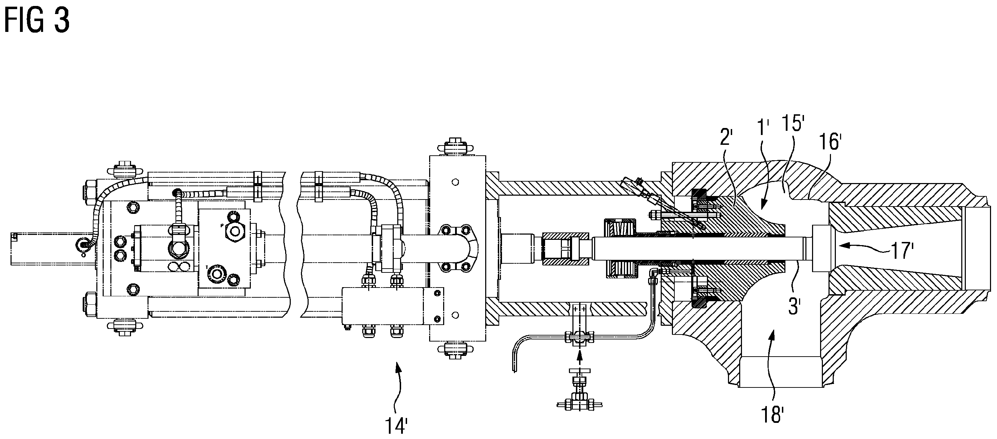

Diese Ventilanordnung erlaubt nicht nur die Kontrolle eines Fluidstroms insbesondere einer Strömungsmaschinenanlage wie einer Dampfturbinenanlage unter Einsatz nur sehr geringer Stellkräfte. Überraschenderweise hat sich gezeigt, dass mittels der erfindungsgemäßen Ventilanordnung die erforderliche Stellkraft auch bei Regelung hoher Drücke des Fluidstroms wie beispielsweise mehr als 100 bar, beispielsweise 150 bar, um mehr als 90 % gegenüber bekannten Systemen, wie unter Einsatz eines bekannten Ventilanordnung wie in Abbildung 3 dargestellt, verringert werden kann. Dies wird hierauf zurückgeführt, dass im Gegensatz zu bestehenden Ventilanordnungen der Druck des Fluidstroms nicht auf die Rückseite des Kolbenelements einwirken kann. Die Ventilanordnung ist vorzugsweise derart gestaltet, dass das Kolbenelement sich auch bei Geschlossenstellung des Ventils zumindest teilweise innerhalb des Hohlraums des stationären Elements befindet. Unter "Geschlossenstellung" wird im Sinne der vorliegenden Erfindung verstanden, dass die Kontaktkante in Kontakt ist mit dem Ventilsitz. Zwar sind auch Ausführungsformen mit beispielsweise zusätzlich abgetrennten Kammern denkbar, jedoch erhöht dies typischerweise lediglich die apparativen Anforderungen ohne merklichen Mehrgewinn. Die Ausgestaltung unter Verhinderung eines Durchflusses zwischen Außenseite des Kolbenelements und stationären Element verhindert hierbei, dass der Fluidstrom in ansonsten unkontrollierter Weise zur Rückseite des Kolbenelements strömt und somit insbesondere das Öffnen des Ventils nur unter Einsatz sehr großer Stellkräfte möglich macht. Ferner zeigte sich, dass durch die Verwendung des spezifizierten Dichtungselements eine besonders gute Verlässlichkeit und Langzeitstabilität der Ventilanordnung erzielt werden kann. Überaschenderweise kann durch den Einsatz einer derartigen Materialkombination ein signifikanter Vorteil erreicht werden, der den herfür zusätzlichen Aufwand mehr als kompensiert. Überraschenderweise kann hierbei selbst ein scheinbar filigraner Aufbau wie die nachfolgend angeführte Ausführungsform, bei der das Kolbenelement in einer zur Kontaktkantenseite offenen Topfform ausgeführt wird, nicht nur eine zuverlässige Regelung, sondern auch eine außergewöhnliche Dauerstabilität bereitstellt.

Dies erlaubt den Einsatz von Antriebselementen mit drastisch verringerten Anforderungen auch in hochbelasteten Bereichen beispielsweise bei Strömungsmaschinenanlagen wie Dampfturbinenanlagen. Insbesondere können hierbei einfache elektromechanische Antriebselemente genutzt werden, die eine exakte Regelung, einen einfachen Austausch, deutlich verminderte Betriebskosten, Wartungskosten und Anschaffungskosten, sowie eine erhöhte Betriebssicherheit bieten. Selbst der Einsatz von beispielsweise hydraulischen oder pneumatischen Antriebselementen, welche für diese deutlich niedrigeren Stellkräfte ausgelegt sind, hat noch immer deutliche Vorteile gegenüber der Verwendung von beispielsweise derzeit verwendeten Hochdruckhydrauliken.

Gleichzeitig zeigte sich überraschenderweise, dass die erfindungsgemäße Ventilanordnung eine deutlich erhöhte Zuverlässigkeit bei gleichzeitig vermindertem Fertigungsaufwand verglichen mit Lösungen wie Doppelsitzventilen, die beispielsweise Probleme hinsichtlich der Bereitstellung der erforderlichen Dichtigkeit aufweisen und gleichzeitig einen sehr hohen Fertigungsaufwand mit sich bringen. Dies gilt insbesondere für hochbelastete Einsatzzwecke wie in den Zuleitungsbereichen des Fluidstroms zur Turbineneinheit bei Strömungsmaschinenanlagen. Als Beispiel sind hierbei insbesondere die Dampfturbinenanlagen zu nennen, bei denen ein hoher Druck sicher geregelt werden muss. Mittels der verbesserten Dichtungseigenschaften und der signifikant erhöhten Verlässlichkeit infolge des spezifizierten Dichtungselements können ferner die Betriebsbedingungen oder Wartungszyklen angepasst werden, so dass beispielsweise durch die Zusammenwirkung der weniger wartungsintensiven und pflegeintensiven elektromechanischen Antriebselemente mit den insgesamt verbesserten Eigenschaften der Ventilanordnung neue Betriebsmodi möglich werden und/oder bei vergleichbaren Betriebsbedingungen Überwachungsprozesse und/oder Wartungsanforderungen vereinfacht werden können. Insbesondere ist es durch diese Kombination der verbesserten Eigenschaften möglich einen Engpass bei insbesondere Strömungsmaschinenanlagen wie Dampfturbinen zu beseitigen, wodurch auch flexiblere Betriebsweise und neue Betriebsmodi unter Ausnutzung der hierdurch resultierenden Möglichkeiten ausgenutzt werden.

Nachfolgend werden exemplarisch einige Ausführungsformen der vorliegenden Erfindung beschrieben, die weitere spezielle Vorteile bieten. Die Gegenstände dieser Ausführungsformen können auch beliebig miteinander kombiniert werden, um besonders vorteilhafte Ausführungsformen für spezielle Anwendungsfälle bereitzustellen.

So wurde beobachtet, dass es typischerweise vorteilhaft ist, wenn mindestens ein Teil der Einbuchtungen eine Oberfläche bestehend aus dem ersten Material aufweist. Gemäß weiteren Ausführungsformen ist es bevorzugt, dass die Oberfläche von mindestens einer Einbuchtung, vorzugsweise mindestens zwei Einbuchtungen, des Dichtungselements vollständig aus dem ersten Material besteht. Typischerweise ist es ausreichend, wenn die Oberfläche des oberen Teils der weiteren Einbuchtungen aus dem ersten Material besteht. Überraschenderweise zeigte sich jedoch, dass die Bereitstellung zumindest einzelne Einbuchtungen mit einer vollständig aus dem ersten Material bestehenden Oberflächen eine bessere Langzeitstabilität für typische Anwendungsfälle bietet. Dieser Vorteil kann noch verstärkt werden, in dem alle Einbuchtung eine Oberfläche bestehend aus dem ersten Material aufweisen. Für viele Anwendungsfälle ist der hierbei resultierende Effekt jedoch nicht derart stark, als dass er den zusätzlichen Aufwand typischerweise rechtfertigt. Für vereinzelte Anwendungsfälle, insbesondere bei denen höchste Qualitätsanforderungen bestehen, kann es jedoch auch bevorzugt sein alle Einbuchtungen mit einer derartigen Oberfläche auszustatten.

Weiter wurde beobachtet die erfindungsgemäßen Einbuchtungen auch vorteilhaft genutzt werden können, um einen Kolbenring aufzunehmen. Gemäß weiterer Ausführungsformen ist es bevorzugt, dass in mindestens einer Einbuchtung des Dichtungselements ein Kolbenring angeordnet ist. Insbesondere ist es hierbei typischerweise bevorzugt, dass die Oberfläche der entsprechenden mindestens einen Einbuchtung vollständig aus dem ersten Material besteht. Für typische Anwendungsfälle hat es sich insbesondere als vorteilhaft erwiesen mindestens eine der Einbuchtungen zur Aufnahme eines Kolbenrings zu verwenden, während mindestens eine, vorzugsweise mindestens drei weitere Einbuchtungen zur Bereitstellung einer Labyrinthdichtung dienen. Dies ermöglicht insbesondere die Bereitstellung einer sehr zuverlässigen Dichtwirkung, welche auch unter sehr extremen Bedingungen einen verlässlichen Effekt liefert.

Der Fachmann ist frei das Material des Kolbenrings gemäß seinem Fachwissen zu wählen. Jedoch wurde festgestellt, dass der Kolbenring ein typischer Angriffspunkt für Korrosionseffekte darstellt. Gemäß weiteren Ausführungsformen ist es bevorzugt, dass der Kolbenring aus einem Kolbenringmaterial besteht, wobei das Kolbenringmaterial eine mindestens vergleichbare Korrosionsbeständigkeit in Bezug auf das erste Material (22, 22") aufweist, vorzugsweise wobei das Kolbenringmaterial das erste Material ist. Unter einer "vergleichbaren Korrosionsbeständigkeit" wird im Sinne der vorliegenden Erfindung eine Korrosionsbeständigkeit verstanden, welche im Wesentlichen der Korrosionsbeständigkeit des anderen Materials entspricht. Vorzugsweise weicht sie höchstens 5%, mehr bevorzugt höchstens 2%, noch mehr bevorzugt höchstens 1%, von der anderen Korrosionsbeständigkeit ab. Vorzugsweise ist die Korrosionsbeständigkeit identisch. Die Anpassung der Korrosionsbeständigkeit ist insbesondere vorteilhaft, da der Kolbenring einen besonderen Angriffspunkt der Korrosion darzustellen scheint und demgemäß zumindest ein dem ersten Material vergleichbarres Material vorteilhafterweise gewählt werden sollte, um eine nicht hierdurch limitierte Verlässlichkeit zu erzielen.

Ferner wurde festgestellt, dass die Bereitstellung eines definierten Mindestabstands typischerweise vorteilhaft ist. Gemäß weiteren Ausführungsformen ist es bevorzugt, dass das Dichtungselement mindestens zwei Einbuchtungen aufweist, wobei der Abstand zwischen mindestens zwei Einbuchtungen, vorzugsweise zwischen mindestens drei Einbuchtungen, mehr bevorzugt zwischen mindestens 5 Einbuchtungen, noch mehr bevorzugt zwischen allen Einbuchtungen, jeweils mindestens 0,7 mm beträgt. Typischerweise ist es bevorzugt, dass der vorgenannte Abstand mindestens 0,9 mm, noch mehr bevorzugt mindestens 1,0 mm beträgt. Insbesondere ist es bevorzugt, dass dies zumindest für Einbuchtungen gilt, welche als Bestandteil einer Labyrinthdichtung fungieren. Es wurde beobachtet, dass hierdurch für typische Anwendungsfälle bei beispielsweise Dampfturbinen eine verlässliche Dichtwirkung und Stabilität erzielt werden kann. Hochspezifische Anpassungen mit großem Aufwand können anhand dieser einfachen Regel somit eingespart werden, so dass die Implementierung der Erfindung für den Fachmann überraschend vereinfacht wird.

Auch wurde festgestellt, dass die Einbuchtungen vorzugsweise eine bestimmte Mindestbreite aufweisen. Gemäß weiterer Ausführungsformen ist es bevorzugt, dass die mindestens eine Einbuchtung mindestens eine breite Einbuchtung umfasst, wobei die mindestens eine breite Einbuchtung eine Breite von mindestens 0,9 mm, vorzugsweise mindestens 0,97 mm, noch mehr bevorzugt mindestens 1,05 mm, aufweist. Typischerweise ist es bevorzugt, dass mindestens 50%, mehr bevorzugt mindestens 66%, noch mehr bevorzugt mindestens 75%, der mindestens einen Einbuchtung die vorgenannte Mindestbreite aufweisen, bezogen auf die Gesamtzahl der Einbuchtungen. Überaschenderweise zeigte sich, dass die Bereitstellung entsprechender Einbuchtungen der Bereitstellung einer entsprechend angepassten größeren Zahl schmälerer Einbuchtungen bei typischen Anwendungsfällen in beispielsweise Dampfturbinen vorzuziehen ist. Insbesondere wurde hierbei eine bessere Abdichtung unter vergleichbaren Bedingungen erzielt.

Ferner wurde beobachtet, dass sehr dünne Einbuchtungen in vielen Anwendungsfällen einen überraschend geringen Vorteil beim Einsatz in Strömungsmaschinenanlagen bereitstellen. Bei weiteren Ausführungsformen ist es bevorzugt, dass das Dichtungselement mindestens zwei Einbuchtungen umfasst, wobei höchstens 10 % der mindestens zwei Einbuchtungen eine Breite von weniger als 0,3 mm, mehr bevorzugt weniger als 0,4 mm aufweist, bezogen auf die Gesamtbreite der mindestens zwei Einbuchtungen. Typischerweise ist es bevorzugt, dass höchstens 5%, mehr bevorzugt höchstens 2%, noch mehr bevorzugt höchstens 1%, der mindestens zwei Einbuchtungen die vorgenannte Höchstbreite aufweisen, bezogen auf die Gesamtbreite der Einbuchtungen. Angesichts des überraschend geringen Effekts, der für die entsprechenden Einbuchtungen erzielt wurde, kann in sehr einfacher Weise durch Ersetzen mehrere kleinerer Einbuchtungen durch eine entsprechende geringere Zahl an größeren Einbuchtungen in einfacher Weise eine Optimierung des Dichtungselements insbesondere für den Einsatz in Strömungsmaschinen vorgenommen werden.

Zudem wurde festgestellt, dass zur Bereitstellung einer besonders effektiven Abdichtung bei Anwendungsfällen wie einer Dampfturbine insbesondere vorteilhaft ist eine bestimmte Mindesttiefe der Einbuchtungen bereitzustellen. Bei weiteren Ausführungsformen ist es bevorzugt, dass die mindestens eine Einbuchtung mindestens eine tiefe Einbuchtung umfasst, wobei die mindestens eine tiefe Einbuchtung eine Tiefe von mindestens 0,8 mm, vorzugsweise mindestens 0,88 mm, noch mehr bevorzugt mindestens 0,93 mm, aufweist, basierend auf dem Abstand von einer Gerade entlang der Außenseite des Kolbenelements in einem Querschnitt entlang der ersten Achse gemessen senkrecht zu der Geraden entlang der Außenseite des Kolbenelements. Typischerweise ist es bevorzugt, dass mindestens 50%, mehr bevorzugt mindestens 66%, noch mehr bevorzugt mindestens 75%, der mindestens einen Einbuchtung die vorgenannte Mindesttiefe aufweisen, bezogen auf die Gesamtzahl der Einbuchtungen. Sofern die Einbuchtung beispielsweise eine abgerundete Bodenfläche aufweist, so bezieht sich die Mindesttiefe auf die tiefste Stelle der Einbuchtung. Insbesondere für Anwendungsfälle wie eine Dampfturbine hat sich durch die Einhaltung der spezifizierten Mindesttiefe ein verbesserter Effekt hinsichtlich der erzielten Dichtungseigenschaften eingestellt.

Ferner wurde festgestellt, dass keine homogene Schicht des ersten Materials erforderlich ist. Gemäß weiteren Ausführungsformen ist es bevorzugt, dass das Dichtungselement mindestens zwei Einbuchtungen aufweist, wobei das erste Material sich unterschiedlich weit in das Kolbenelement im Bereich verschiedener Einbuchtungen hinein erstreckt, basierend auf dem Abstand von einer Gerade entlang der Außenseite des Kolbenelements zu der Grenze zwischen dem ersten Material und dem zweiten Material in einem Querschnitt entlang der ersten Achse gemessen senkrecht zu der Geraden entlang der Außenseite des Kolbenelements. Beispielsweise kann das erste Material sich im Fall eines einzelnen oder mehrerer Einbuchtungen bis deutlich über die Einbuchtung hinaus in das Material des Kolbenelements erstrecken, während es bei mindestens einer anderen Einbuchtung sich noch nicht einmal bis zum Ende der Einbuchtung erstreckt. Sofern sich beispielsweise infolge des Fertigungsprozesses eine Mischschicht des ersten Materials und des zweiten Materials ergeben hat, so wird zur Bestimmung der Grenze zwischen dem ersten Material und dem zweiten Material eine Mittellinie durch den Bereich zwischen dem reinen ersten Material und dem reinen zweiten Material in dem Querschnitt entlang der ersten Achse als Grenze angenommen. Durch die gezielte Anpassung der Schichtform des ersten Materials kann jedoch überraschenderweise nicht nur Material und die Zeit zur Aufbringung eingespart werden. Ferner scheint durch die ungleichförmige Beschichtung eine stabilere Anbringung der entsprechenden Schicht erzielbar zu sein. Überraschenderweise konnten bei verhältnismäßig extremen Auftragungsbedingungen unter beispielsweise minimalem Energieeintrag in das umgebende Material des Kolbenelements und starker Belastung teilweise eine Ablösung beobachtet werden. Unter gleichen Bedingungen zeigte eine derartige inhomogene Aufbringung eine stabile Beschichtung. Es wird vermutet, dass ähnliche Effekte auch beispielsweise bei regulären Aufbringungsverfahren und den Langzeitbelastungen im normalen Betrieb im Verlauf von mehreren Jahren zu befürchten sind, so dass hiermit ein signifikanter zusätzlicher Vorteil erzielt werden kann.

Das erste Material kann sich in verschiedener Weise vom zweiten Material unterscheiden. Beispielsweise kann es sich um ein Material identischer Zusammensetzung, jedoch unterschiedlicher Mikrostruktur handeln. Gemäß weiteren Ausführungsformen ist es bevorzugt, dass das erste Material verglichen mit dem zweiten Material eine andere Mikrostruktur aufweist oder aus einem anderen Metall oder einer anderen Metalllegierung besteht, vorzugsweise aus einem anderen Metall oder einer anderen Metalllegierung besteht. Typischerweise ist es bevorzugt, dass das erste Material ein anderes Metall oder eine andere Metalllegierung darstellt. Beispielsweise könnte der Hauptteil des beweglichen Elements aus einer Nickel Superlegierung gefertigt sein, während das erste Material Titan ist. Die Bereitstellung einer entsprechenden Mikrostruktur durch beispielsweise gezielte Rekristallisationsprozesse unter partiellem Aufschmelzen der Seitenwand des Kolbenelements ist zwar möglich, jedoch deutlich komplexer. Demgemäß wird insbesondere bei der Serienfertigung entsprechender Bauteile mit der Gefahr von Qualitätsschwankungen gerechnet, welche wiederum entsprechende Qualitätskontrollen erforderlich machen würde insbesondere für den Einsatz in Strömungsmaschinen. Die Verwendung eines anderen Metalls oder einer anderen Metalllegierung ist hingegen deutlich weniger fehleranfällig und zudem leichter hinsichtlich des Ergebnisses zu kontrollieren. Beispiele von Legierungen, welche vorteilhaft als erstes Material eingesetzt werden können, sind Stellite 6 und Inconel 625. Beispiele von Legierungen, welche vorteilhaft als zweites Material eingesetzt werden können sind 21CrMoV5-7 und X22CrMoV12-1.

Ferner wurde beobachtet, dass insbesondere für den Einsatz in einer typischen Strömungsmaschine das erste Material sich vorzugsweise lediglich bis zu einer bestimmten Tiefe erstreckt. Gemäß weiteren Ausführungsformen ist es bevorzugt, dass sich das erste Material (von der Außenseite des Kolbenelements bis zu einer Tiefe von höchstens 14 mm, vorzugsweise höchstens 11 mm, noch mehr bevorzugt höchstens 8 mm, in das Kolbenelement erstreckt. Einerseits scheinen Vorteile hinsichtlich beispielsweise Korrosion oder vergleichbaren Effekten nicht in signifikantem Maße zu verstärken. Andererseits scheinen bei speziellen Anwendungsfällen von Strömungsmaschinen potentiell negative Begleiterscheinungen bei dickeren Schichtdicken des ersten Materials beobachtet worden zu sein, beispielsweise hinsichtlich der Obergrenze der mechanischen Stabilität. Sofern sich beispielsweise infolge des Fertigungsprozesses eine Mischschicht des ersten Materials und des zweiten Materials ergeben hat, so bezieht sich die oben genannte Tiefe auf die Tiefe bis zu der das reine erste Material vorhanden ist.

Für typischen Anwendungsfälle von beispielsweise Dampfturbinen scheint es ferner vorteilhaft zu sein einen Großteil der Einbuchtungen mit einer Oberfläche aus dem ersten Material auszustatten. Gemäß weiteren Ausführungsformen ist es bevorzugt, dass das Dichtungselement mindestens zwei Einbuchtungen aufweist, wobei die Oberfläche von mindestens 50 %, mehr bevorzugt von mindestens 66%, noch mehr bevorzugt von mindestens 75 %, der mindestens zwei Einbuchtungen vollständig aus dem ersten Material besteht. Typischerweise ist es bevorzugt, dass die äußere Oberfläche aller Einbuchtungen des Dichtungselements aus dem ersten Material besteht. Dies scheint insbesondere die Langzeitabdichteigenschaften der Ventilanordnung beim Einsatz im Dampfstrom typischer Dampfturbinen zu verbessern.

Ferner hat es sich als typischerweise bevorzugt erwiesen, wenn das erste Material auch basierend auf seiner Korrosionsbeständigkeit gewählt wird. Gemäß weiteren Ausführungsformen ist es bevorzugt, dass das erste Material eine höhere Korrosionsbeständigkeit gegenüber dem Fluidstrom aufweist als das zweite Material. Typischerweise ist es bevorzugt, dass die Korrosionsbeständigkeit des ersten Materials mindestens 10%, mehr bevorzugt mindestens 40%, noch mehr bevorzugt mindestens 80%, höher ist das die Korrosionsbeständigkeit des zweiten Materials. Beispielsweise kann die Korrosionbeständigkeit mittels des Salzsprühtests gemäß DIN EN ISO 9227 bestimmt werden. Insbesondere die Korrosion scheint eine besondere Belastung an dem Ort der Einbuchtungen zu sein, so dass der Einsatz eines derartigen Materials an dieser Stelle besonders vorteilhaft ist.

Typischerweise ist es bevorzugt, dass ein additives Fertigungsverfahren zur Aufbringung des ersten Materials genutzt wird. Gemäß weiterer Ausführungsformen ist es bevorzugt, dass das erste Material mittels einem additiven Fertigungsverfahren auf das Kolbenelement aufgebracht wurde. Additive Fertigungsverfahren sind dadurch gekennzeichnet, dass mittels des Verfahrens ein Material aufgebracht wird. Gemäß der vorliegenden Erfindung wird vorzugsweise ein Metall oder eine Metalllegierung aufgebracht. Hierbei wird das Material typischerweise als Feststoff in dem Verfahren eingesetzt und kurzfristig aufgeschmolzen. Das Aufschmelzen erfolgt beispielsweise mittels einer Flamme, eines Plasmas oder eines Lasers. Beispielsweise kann hierbei ein Verfahren wie das Plasmaspritzen, Niedertemperaturplasmabeschichtung, Detonationsspritzen, Flammspritzen oder Auftragsschweißen angewendet werden. Sehr gute Ergebnisse für typische Anwendungsfälle wurden beispielsweise mit dem Auftragsschweißen wie insbesondere das Laserauftragsschweißen erzielt. Dies ermöglicht eine flexible Applikation und eine verlässliche Schicht des ersten Materials, das auch gut weiterbearbeitet werden kann. Typischerweise ist es bevorzugt, dass das genutzte additive Fertigungsverfahren kein 3D Druckverfahren darstellt. Zwar sollte die Oberflächenqualität nicht ungleichmäßiger sein als bei den anderen Verfahren. Jedoch wurde überaschenderweise beobachtet, dass die Nachbearbeitung typischerweise zu weniger zufriedenstellenden Oberflächenqualitäten führt. Dies ist insbesondere für die vorliegende Verwendung bedeutend, da die dauerhafte und zuverlässige Beweglichkeit des Kolbenelements in der Ventilanordnung eine hohe Oberflächenqualität erfordert. Überraschenderweise ergaben sich vereinzelt auch nach identischen Nachbearbeitungsverfahren vereinzelt Fehlstellen, die zumindest eine Nachkontrolle erforderlich machen, welche nicht oder zumindest in deutlich reduzierter Menge bei typischen anderen additiven Fertigungsverfahren erforderlich ist. Alternativ hierzu kann das erste Material auch durch Umwandlung des vorhandenen zweiten Materials erhalten werden. Hierbei kann beispielsweise das vorhandene zweite Material unter Einsatz eine Diffusionsprozesses wie beispielsweise Nitrierhärtung umgewandelt werden. Derartige Nitrierhärtungsprozesse sind beispielsweise unter Einsatz eines Plasmas möglich, können jedoch auch beispielsweise durch Eintauchen in ein stickstoffabgebendes Medium erzeugt werden.

Gemäß der Erfindung weist die Rückseite mindestens einen Durchgang auf, wobei der mindestens eine Durchgang den Bereich hinter der Rückseite und den gegenüberliegenden Bereich innerhalb der Kontaktkante verbindet. Dies erlaubt einen besonders einfachen Druckausgleich auf beiden Seiten. Da beispielsweise kein Druckausgleich mit dem Raum außerhalb der Fluidstromleitung erforderlich ist, handelt es sich somit um ein abgeschlossenes System, was die Betriebssicherheit weiter erhöht.

Gemäß der Erfindung weist das Kolbenelement eine auf der Kontaktkantenseite offene Topfform mit einer Seitenwand auf, wobei das Kolbenelement gegenüber der Kontaktkante eine Rückwand aufweist, wobei die Rückwand mindestens einen Durchgang aufweist. Hierdurch wird es möglich das Gewicht des Kolbenelements deutlich zu reduzieren, wobei überraschenderweise die Ventilanordnung noch immer zuverlässig genug für den Einsatz auch in hochbelasteten Fällen wie in den Dampfleitungen einer Dampfturbinenanlage beispielsweise zwischen Dampferzeuger und Dampfturbine ist. Überraschenderweise zeigten sich entsprechende Ventilanordnungen insbesondere hinsichtlich ihres Verschleißes über längere Nutzung als typischerweise überlegen.

Bei weiteren Ausführungsformen ist es bevorzugt, dass der Kolbendurchmesser mindestens 75 % des Ventilsitzdurchmessers, mehr bevorzugt mindestens 85 % des Ventilsitzdurchmessers, noch mehr bevorzugt mindestens 90 % des Ventilsitzdurchmessers beträgt. Hiermit können insbesondere kompakte Fluidstromkontrollelemente realisiert werden.

Bei weiteren Ausführungsformen ist es bevorzugt, dass der Kolbendurchmesser höchstens 99,5 %, mehr bevorzugt höchsten 99 %, des Ventilsitzdurchmessers beträgt. Überraschenderweise erwies es sich typischerweise als vorteilhaft den Bereich der Kontaktkante zu verbreitern, wobei ein verbesserter Kontakt zwischen Kontaktkante und Ventilsitz erreicht wurde.

Bei weiteren Ausführungsformen ist es bevorzugt, dass sich die Kontaktkante auf einer Verdickung des Kolbenelements, vorzugsweise einer Wulst, befindet. Insbesondere ist es bevorzugt, dass sich die Verdickung zumindest teilweise weg von der ersten Achse erstreckt. Durch die Bereitstellung einer derartigen Verdickung kann beispielsweise eine Angriffsfläche für den Fluidstrom bereitgestellt werden, die in der Geschlossenstellung des Ventils einen zusätzlichen Druck ausübt und das Ventil geschlossen hält. Dies ist beispielsweise vorteilhaft, sollte das Koppelelement brechen oder eine Sicherung der Position des beweglichen Elements während des Austauchs der Antriebs versagen.

Bei weiteren Ausführungsformen ist es bevorzugt, dass die Außenseite des Kolbenelements mindestens eine Dichtung, mehr bevorzugt mindestens zwei Dichtungen, umfassend mindestens ein Dichtungselement, vorzugsweise ein Dichtungselement, aufweist, wobei das Dichtungselement vorzugsweise mindestens ein Element aus der Gruppe bestehend aus Labyrinthdichtungen wie Durchblicklabyrinthdichtungen, Kolbenringen und Bürstendichtungen, mehr bevorzugt aus der Gruppe bestehend aus Labyrinthdichtungen wie Durchblicklabyrinthdichtungen und Kolbenringen, umfasst. Vorzugsweise besteht die Dichtung aus einem derartigen Dichtungselement. Eine für typische Anwendungsfälle bevorzugte Art des Dichtungselements umfasst eine Labyrinthdichtung und mindestens einen Kolbenring. Insbesondere ist es typischerweise bevorzugt, wenn die Außenseite der Seitenwand und/oder die der Außenseite der Seitenwand gegenüberliegende Innenseite des Hohlraums, vorzugsweise die Außenseite der Seitenwand, mindestens eine Labyrinthdichtung und mindestens einen Kolbenring aufweist. Labyrinthdichtungen können hierbei in verschiedenen Formen ausgeführt werden. Beispielsweise können sie entweder aus der betreffenden Oberfläche herausragen oder in der Form von Einfräsungen in der betreffenden Oberfläche vorliegen. Für Anwendungsfälle von hohen Drücken des Fluidstromes wie beispielsweise bei Dampfturbinenströmungsanlagen hat es sich typischerweise als vorteilhaft erwiesen die Labyrinthdichtung in der Form von Einbuchtungen der Oberfläche auszuführen.

Entsprechende Einbuchtungen für Labyrinthdichtungen werden typischerweise besonders einfach, im Wesentlichen senkrecht zur entsprechenden Oberfläche, hergestellt. Jedoch kann eine derartige Einbuchtung natürlich auch angewinkelt werden. Vorzugsweise weisen entsprechende Einbuchtungen einen Winkel von 45° bis 135°, mehr bevorzugt einen Winkel von 55° bis 125°, noch mehr bevorzugt einen Winkel von 80° bis 100°, auf, bezogen auf die entsprechende Oberfläche, in der die Einbuchtungen eingebracht werden.

Insbesondere ist es typischerweise bevorzugt, wenn die Außenseite der Seitenwand und/oder die der Außenseite der Seitenwand gegenüberliegende Innenseite des Hohlraums, vorzugsweise die Außenseite der Seitenwand, mindestens eine Labyrinthdichtung und mindestens einen Kolbenring aufweist. Bereits eine derartige Labyrinthdichtung ist typischerweise ausreichend, um die Leckage unter einem akzeptablen Grenzwert auch beispielsweise bei hochbelasteten Anwendungen wie in Dampfzuleitungen zur Turbine bei Dampfturbinenanlagen zu halten. Die Kombination mit beispielsweise einem Kolbenring zur weiteren Verringerung und Absicherung erlaubt nicht nur die Leckage weiter zu reduzieren, sondern auch die Zuverlässigkeit weiter zu erhöhen.

Typischerweise ist es bevorzugt, dass das Kolbenelement eine runde Form aufweist. Insbesondere ist es typischerweise bevorzugt, dass der Querschnitt des Kolbenelements senkrecht zur ersten Achse oval oder kreisförmig, mehr bevorzugt kreisförmig, ist. Zwar sind auch andere Formen wie rechteckig, quadratisch oder dreieckig, insbesondere mit abgerundeten Kanten, denkbar, jedoch haben sich derartige Runde Formen für den vorliegenden Fall als besonders vorteilhaft erwiesen, da diese hervorragend abzudichten und einfach herzustellen sind.

Bei weiteren Ausführungsformen ist es bevorzugt, dass zwischen Koppelelement und stationärem Element eine Stopfbuchspackung angeordnet ist. Die Stopfbuchspackung stellt eine besonders zuverlässige Abdichtung gegen beispielsweise Dampfaustritt aus dem Ventilanordnung oder Atmosphäreneintritt in der Ventilanordnung bereit. Hierbei werden vorzugsweise verschiedene Ringe und/oder Buchsen kombiniert, um eine hochbelastbare und dennoch zuverlässige Abdichtung zu erzielen. Insbesondere bevorzugt bestehen die Ringe und/oder Buchsen zumindest teilweise, mehr bevorzugt zu mindestens 50% bezogen auf deren Anzahl, mehr bevorzugt vollständig, aus Graphit und/oder Edelstahl.

Bei weiteren Ausführungsformen ist es bevorzugt, dass das Koppelelement zumindest teilweise, mehr bevorzugt im Bereich der Stopfbuchspackung, mit einer Hartstoffbeschichtung beschichtet ist. Eine derartige Beschichtung kann beispielsweise mit Detonationsbeschichtung, Laserauftragsschweißen, Nitrieren, Plasmaspritzen, Niedertemperaturplasmabeschichtung, Flammspritzen oder Kombinationen hiervon, mehr bevorzugt Detonationsbeschichtung, Laserauftragsschweißen, Nitrieren, Plasmaspritzen oder Kombinationen hiervon, noch mehr bevorzugt Detonationsbeschichtung, Laserauftragsschweißen oder Kombinationen hiervon, versehen werden. Ein besonders bevorzugtes Beschichtungsverfahren ist die Detonationsbeschichtung. Hiermit können besonders belastbare Beschichtungen erzielt werden.

Bei weiteren Ausführungsformen ist es bevorzugt, dass das stationäre Element im Bereich der Stopfbuchspackung einen Einspritzkanal aufweist. Ein derartiger Einspritzkanal kann beispielsweise genutzt werden, um eine abdichtende Masse wie Graphitpaste einzuspritzen und eine Notreparatur durchzuführen. Dies ist eine sehr vorteilhafte zusätzliche Absicherung, um die Zuverlässigkeit und Sicherheit der Ventilanordnung weiter zu erhöhen.

Bei weiteren Ausführungsformen ist es bevorzugt, dass das Koppelelement ein Befestigungselement aufweist, wobei das Befestigungselement geeignet ist lösbar oder unlösbar, vorzugsweise lösbar, an einem elektromechanischen Antrieb befestigt zu werden. Beispiele des Befestigungselements können ausgewählt werden aus der Gruppe bestehend aus Einbuchtungen, Ausbuchtungen, Gewinden zur Befestigung von Schraubverbindungen und Hohlräumen zur Befestigung mittels Zylinderstiften. Beispielsweise kann das Ende des Koppelelements als Hammerkopf ausgeführt sein, wobei der elektromechanische Antrieb zur Übertragung der translatorischen Bewegung über ein passendes Gegenstück lösbar mit dem Hammerkopfende des Koppelelement verbunden wird.

Typischerweise ist es bei vielen Ausführungsformen bevorzugt, dass die Verbindung zwischen Antrieb und beweglichem Element kraftschlüssig oder formschlüssig, mehr bevorzugt formschlüssig, erfolgt. Zwar erzielt auch eine kraftförmige Verbindung sehr gute Ergebnisse. Insbesondere hat sich jedoch die formschlüssige Verbindung für typische Anwendungsfälle als vorteilhafte Verbindungsart erwiesen, um eine hohe Zuverlässigkeit bereitzustellen, wobei die Verbindung jedoch auch schnell wieder gelöst werden kann, um beispielsweise den Antrieb auszutauschen.

Bei weiteren Ausführungsformen ist es bevorzugt, dass die Rückseite bzw. die Rückwand mindestens 2 Durchgänge, mehr bevorzugt mindestens 3 Durchgänge, noch mehr bevorzugt mindestens 4 Durchgänge, aufweist. Typischerweise ist es bevorzugt, dass die Durchgänge symmetrisch auf der Rückseite **bzw.** der Rückwand angeordnet sind. Die Verwendung mehrerer Durchgänge erwies sich insbesondere als vorteilhaft, da hiermit offenbar ein gleichmäßigerer Fluss des Fluids durch das Kolbenelement bzw.die Rückwand erzielt wird und die Bewegung des beweglichen Elements noch gleichmäßiger erfolgen kann, auch wenn die Bewegung sehr schnell erfolgen soll. Dies ist beispielsweise besonders vorteilhaft für Anwendungen wie die Verwendung als Hauptventil oder auch als Ventil in der Fluidstromleitung einer Dampfturbinenanlage zwischen Dampferzeuger und Dampfturbine.

Bei weiteren Ausführungsformen ist es bevorzugt, dass die Kontaktkante abgerundet ist und geeignet ist einen Linienkontakt mit dem Ventilsitz bereitzustellen. Hierbei wird typischerweise eine besonders zuverlässige Abdichtung erzielt, wenn der Fluidstorm vollständig gestoppt werden soll. Eine derartige Abrundung ist beispielsweise gut ersichtlich in einem Querschnitt entlang der ersten Achse.

Gemäß einem weiteren Aspekt betrifft die vorliegende Erfindung ein Fluidstromkontrollelement umfassend eine erfindungsgemäße Ventilanordnung, eine Fluidstromleitung und einer Fluidstromeintrittsöffnung umfassend einen Ventilsitz innerhalb der Fluidstromleitung, wobei der Ventilsitz geeignet ist die Kontaktkante der Ventilanordnung zu kontaktieren. Vorzugsweise findet ein derartiges Fluidstromkontrollelement Einsatz in einer Strömungsmaschinenanlage. Insbesondere ist es hierbei bevorzugt, dass der hierbei kontrollierte Fluidstrom von der Strömungsmaschine zur Energieerzeugung genutzt wird. Überraschenderweise sind die erfindungsgemäßen Fluidstromkontrollelemente auch für die äußerst hohen Anforderungen der Steuerung des in einer Strömungsmaschinenanlage als Energieträger genutzten Fluidstroms geeignet. Beispielsweise kann das erfindungsgemäße Fluidstromkontrollelement besonders vorteilhaft in die Fluidstromleitung vor der Turbine der Strömungsmaschine eingebaut werden.

Bei weiteren Ausführungsformen ist es bevorzugt, dass die Fluidstromleitung im Bereich der Ventilanordnung einen Kolbenraum aufweist, wobei der Kolbenraum eine Einbuchtung aufweist, wobei sich die Einbuchtung in Richtung des beweglichen Elements erstreckt. Hierbei wurde beobachtet, dass eine derartige ungleichmäßige Ausformung des Kolbenraums überraschenderweise eine noch besser kontrollierte Bewegung des beweglichen Elements ermöglicht.

Typischerweise ist es bevorzugt, dass die Einbuchtung den Abstand zwischen Kolbenraum und Außenseite des Kolbenelements auf weniger als 75 %, mehr bevorzugt weniger als 65 %, noch mehr bevorzugt auf weniger als 55 %, des durchschnittlichen Abstands zwischen Kolbenraum und Außenseite des beweglichen Elements verengt, bezogen auf den Querschnitt senkrecht zur ersten Achse durch die Mitte des Teils des beweglichen Elements, dass in der Geschlossenstellung aus dem Hohlraum des stationären Elements ragt. Dies resultiert überraschenderweise in einer Stabilisierung des beweglichen Elements, wodurch dessen Abnutzung merklich verringert wird.

Bei weiteren Ausführungsformen ist es bevorzugt, dass sich die Einbuchtung über mindestens 3 %, mehr bevorzugt mindestens 5 %, noch mehr bevorzugt mindestens 7 %, des Kolbenraums erstreckt, bezogen auf den Querschnitt senkrecht zur ersten Achse durch die Mitte des Teils des beweglichen Elements, dass in der Geschlossenstellung aus dem Hohlraum des stationären Elements ragt. Insbesondere für Anwendungsfälle bei Fluidströmen mit hohem Druck wie beispielsweise Dampfströmen in Dampfturbinenanlagen hat es sich als vorteilhaft erwiesen die Einbuchtung nicht zu klein zu gestalten. Insbesondere wird hierbei eine hohe Zuverlässigkeit erzielt.

Bei weiteren Ausführungsformen ist es bevorzugt, dass sich die Einbuchtung über höchstens 20 %, mehr bevorzugt mindestens 17 %, noch mehr bevorzugt mindestens 15 %, des Kolbenraums erstreckt, bezogen auf den Querschnitt senkrecht zur ersten Achse durch die Mitte des Teils des beweglichen Elements, dass in der Geschlossenstellung aus dem Hohlraum des stationären Elements ragt. Auch zeigte sich, dass eine zu große Dimensionierung der Einbuchtung typischerweise keine Verbesserung bewirkt. In Einzelfällen kann der mittels der Einbuchtung erzielte positive Effekt hierdurch sogar wieder verringert werden.

Bei weiteren Ausführungsformen ist es bevorzugt, dass das Fluidstromkontrollelement einen elektromechanischen Antrieb umfasst, der mit dem Koppelelement des beweglichen Elements lösbar oder unlösbar, vorzugsweise lösbar, verbunden ist und wobei der elektromechanische Antrieb geeignet ist das bewegliche Element entlang der ersten Achse zu bewegen. Insbesondere die lösbare Verbindung mit einem leicht auswechselbaren elektromechanischen Antrieb erlaubt überraschenderweise einen schnellen und sicheren Austausch des Antriebs auch im laufenden Betrieb.

Gemäß einem weiteren Aspekt betrifft die vorliegende Erfindung eine Strömungsmaschinenanlage umfassend mindestens eine erfindungsgemäße Ventilanordnung und/oder ein erfindungsgemäßes Fluidstromkontrollelement.

Bei weiteren Ausführungsformen ist es bevorzugt, dass die Strömungsmaschinenanlage eine Dampfturbinenanlage ist. Beispielsweise resultiert der typischerweise hierbei verwendeter hoher Dampfdruck in besonders hohen erforderlichen Stellkräften zur Regelung eines gebräuchlichen Ventils, wodurch derartige Strömungsmaschinenanlagen besonders von den erfindungsgemäßen Ventilanordnungen und Fluidstromkontrollelementen profitieren.

Bei weiteren Ausführungsformen ist es bevorzugt, dass die Ventilanordnung und/oder das Fluidstromkontrollelement in der Dampfleitung zwischen Dampferzeuger und Dampfturbine angeordnet sind. Da hier typischerweise die höchsten Dampfdrücke vorhanden sind, erweisen sich die erfindungsgemäßen Vorteile als besonders groß.

Bei weiteren Ausführungsformen ist es bevorzugt, dass die Ventilanordnung und/oder das Fluidstromkontrollelement Bestandteil der Hauptabsperrung ist. Insbesondere ist es typischerweise bevorzugt, dass die Ventilanordnung und/oder das Fluidstromkontrollelement hierbei als Schnellschlussventil fungieren. Da hierbei geringere Kräfte aufgewendet werden müssen und gleichzeitig eine hohe Zuverlässigkeit erzielt wird, hat sich der Einsatz an dieser Stelle als besonders vorteilhaft erwiesen.

Bei weiteren Ausführungsformen ist es bevorzugt, dass die Ventilanordnung und/oder das Fluidstromkontrollelement Bestandteil eines Entnahmeregelventils ist. Beispielsweise kann hierbei ein Teil des Fluidstroms entnommen werden, um beispielsweise zur Aufheizung eines Vorwärmers vor dem Dampferzeuger eingesetzt zu werden. Auch kann hierbei beispielsweise ein Teil des Fluidstroms entnommen und als Prozessdampf eingesetzt werden.

Gemäß einem weiteren Aspekt betrifft die vorliegende Erfindung ein Verfahren zur Bereitstellung oder Instandsetzung einer erfindungsgemäßen Ventilanordnung oder eines erfindungsgemäßen Fluidstromkontrollelements, wobei das erste Material mittels eines additiven Fertigungsverfahrens wie dem Laserauftragsschweißen auf das zweite Material des beweglichen Elements aufgebracht wird. Die Methode der Herstellung oder Reparatur hat sich als besonders einfach und zuverlässig erwiesen.

Ferner wurde beobachtet, dass spanende Bearbeitungsschritte besonders gut zur Herstellung der mindestens einen Einbuchtung geeignet sind. Gemäß weiteren Ausführungsformen ist es bevorzugt, dass der Aufbringung des ersten Materials ein spanender Fertigungsschritt folgt zur Formung der mindestens einen Einbuchtung. Beispielsweise werden hierbei Einbuchtungen in das erste Material gedreht oder gefräst. Hierdurch kann auf einfache Weise eine Labyrinthdichtung bereitgestellt werden.

Die Aussparung für das erste Material des Kolbenelements kann ebenfalls vorteilhaft mit einem spanenden Fertigungsschrittes erzeugt werden. Gemäß weiteren Ausführungsformen ist es bevorzugt, dass das erste Material zumindest teilweise in mindestens eine Einbuchtung des Kolbenelements eingebracht wird, wobei die Einbuchtung zuvor mittels eines spanenden Fertigungsschrittes erzeugt wurde. Beispielsweise kann diese mindestens eine Einbuchtung im Kolbenelement mittels Drehen oder Fräsen erfolgen. Zwar kann ein entsprechender Freiraum auch direkt während des Fertigungsprozesses des Kolbenelements erzeugt werden. Jedoch zeugte sich, dass die Bereitstellung eines Rohlings gefolgt von einem derartigen spanenden Bearbeitungsschritt eine überraschend vorteilhafte Kombination aus hoher Produktqualität und geringem Aufwand ermöglicht.

Gemäß einem weiteren Aspekt betrifft die vorliegende Erfindung ein Verfahren zur Bereitstellung oder Instandsetzung einer Strömungsmaschinenanlage, vorzugsweise einer Dampfturbinenanlage, wobei das Verfahren den Einbau oder die Instandsetzung einer erfindungsgemäßen Ventilanordnung oder eines erfindungsgemäßen Fluidstromkontrollelements umfasst.

Bei weiteren Ausführungsformen ist es bevorzugt, dass das Verfahren den zumindest teilweisen Austausch eines vorhandenen Fluidstromkontrollelements umfassend einen Hochdruckhydraulikantrieb zur Bereitstellung eines erfindungsgemäßen Fluidstromkontrollelements umfassend einen Niederdruckhydraulikantrieb oder einen elektromechanischen Antrieb umfasst. Vorzugsweise bezieht sich der Begriff "Hochdruckhydraulikantrieb" auf einen Antrieb mit mindestens 60 bar, mehr bevorzugt mindestens 80 bar, Druck. Ferner bezieht sich der Begriff "Niederdruckantrieb" im Rahmen der vorliegenden Erfindung vorzugsweise auch einen Antrieb mit einem Druck von höchstens 30 bar, mehr bevorzugt höchstens 20 bar, noch mehr bevorzugt höchstens 10 bar. Bei derartigen Upgradeverfahren werden für typische Anwendungen besonders große Verbesserungen erzielt.

Bei weiteren Ausführungsformen ist es bevorzugt, dass das Verfahren den zumindest teilweisen Austausch eines vorhandenen Fluidstromkontrollelements umfassend einen nicht elektromechanischen Antrieb gegen ein erfindungsgemäßes Fluidstromkontrollelement umfassend einen elektromechanischen Antrieb umfasst. Wie bereits beschrieben wurde, bietet der gemäß der vorliegenden Erfindung mögliche Wechsel des Antriebssystems in Verbindung mit der hohen Zuverlässigkeit des Fluidstromkontrollelements eine besonders vorteilhafte Kombination für typische Strömungsmaschinenanlagen wie insbesondere Dampfturbinenanlagen.

Gemäß einem weiteren Aspekt betrifft die vorliegende Erfindung die Verwendung einer erfindungsgemäßen Ventilanordnung oder eines erfindungsgemäßen Fluidstromkontrollelements zur Regelung des Fluidstroms einer Strömungsmaschinenanlage, vorzugsweise einer Dampfturbinenanlage. Unter Regelung werden hierbei insbesondere die Einstellung eines gewünschten Dampfdrucks sowie insbesondere das Blockieren des Fluidstroms verstanden. Überraschenderweise erlaubt die erfindungsgemäße Ventilanordnung und das erfindungsgemäße Fluidstromkontrollelement nicht nur einen zuverlässigen Verschluss der Fluidstromleitung, sondern erlaubt auch eine präzise Verringerung oder Vergrößerung des Fluidstroms. Insbesondere in Kombination mit dem elektromechanischen Antrieb erlaubt dies eine schnelle und präzise Regelung je nach den gegenwärtigen Anforderungen. Zwar kann eine erfindungsgemäße Ventilanordnung oder eine erfindungsgemäße Fluidstromkontrollelement theoretisch auch zur Regelung eines sekundären Fluidstroms wie eines Hydraulikölstroms genutzt werden, jedoch wird es besonders bevorzugt für die Regelung des für die Energieerzeugung in einer Strömungsmaschine genutzten Fluidstroms genutzt. Hierbei erwies es sich als besonders vorteilhaft.

Die nachstehende detaillierte Beschreibung der Abbildungen soll lediglich einige spezifische Ausführungsformen verdeutlichen. Diese sind jedoch nicht derart zu verstehen, dass sie den Gegenstand der Anmeldung begrenzen. Diese Beschreibung soll lediglich spezifische Ausführungsformen mit spezifischen Vorteilen näher beschreiben, um das Verständnis zu erleichtern.

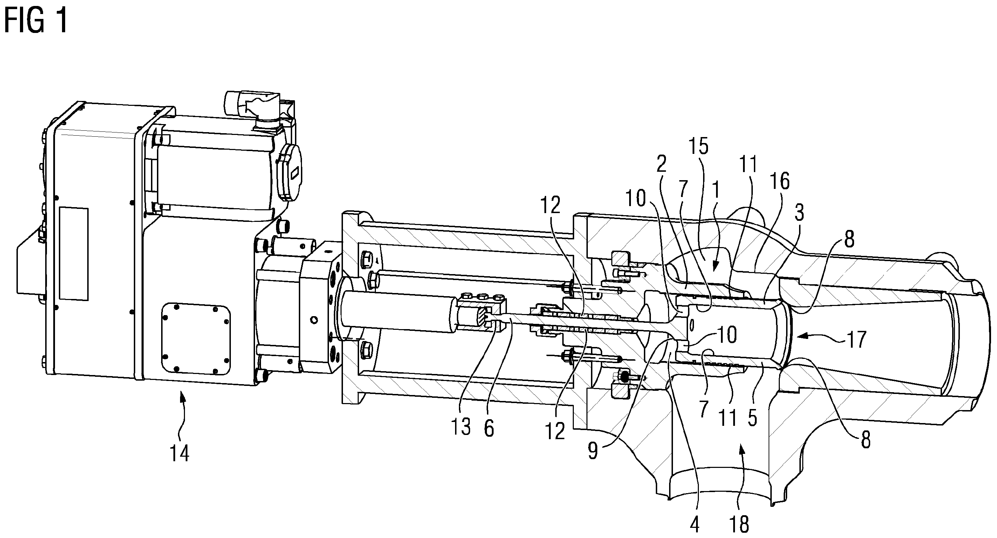

Abbildung 1 zeigt einen schematischen Querschnitt eines erfindungsgemäßen Fluidstromkontrollelements als Seitenansicht. Das Fluidstromkontrollelement umfasst eine Ventilanordnung 1, eine Fluidstromleitung 18 und einer Fluidstromeintrittsöffnung 17 innerhalb der Fluidstromleitung 18. Die Fluidstromeintrittsöffnung 17 weist einen Ventilsitz auf, der geeignet ist die Kontaktkante 8 der Ventilanordnung 1 zu kontaktieren.

Die Fluidstromleitung 18 weist im Bereich der Ventilanordnung 1 einen Kolbenraum 15 auf. In diesem Kolbenraum 15 findet sich eine Einbuchtung 16, wobei die Einbuchtung 16, sich in Richtung des beweglichen Elements 3 erstreckt.

Die Ventilanordnung 1 dient der Regelung des Fluidstroms, der durch die Fluidstromleitung 18 fließt. In dem in Abbildung 1 dargestellten Fall handelt es sich bei dem Fluidstrom um einen Dampfstrom, der von dem Dampferzeuger einer Dampfturbinenanlage als Beispiel der Strömungsmaschinenanlage zur Dampfturbine geleitet wird.

Die Ventilanordnung 1 umfasst ein stationäres Element 2 und ein bewegliches Element 3, wobei das stationäre Element 2 einen Hohlraum 4 aufweist, in dem sich das bewegliche Element entlang einer ersten Achse translatorisch bewegen kann.

Die bewegliche Struktur umfasst ein Kolbenelement 5 und einem Koppelelement 6. Das Kolbenelement 5 gemäß der in Abbildung 1 dargestellten Ausführungsform ist gekennzeichnet durch eine Zylinderform, wobei der Zylinder eine auf der Seite der Kontaktkante 8 offene Topfform aufweist. Die Seitenwand 7 des Kolbenelements 5 ist begrenzt durch die Außenseite des Kolbenelements 5, die sich parallel zu ersten Achse erstreckt und die Mantelfläche des Zylinders darstellt. Die Ventilanordnung 1 ist hierbei derart gestaltet, dass ein Durchfluss des Fluidstroms zwischen stationärem Element 2 und Außenseite des Kolbenelements 5 verhindert wird. Da hierdurch der unter hohem Druck stehende Fluidstrom nicht zur Rückseite des Kolbenelements 5 gelangen kann, wird das Ventil entlastet und kann mit geringeren Stellkräften bewegt werden. Um den Durchfluss des Fluidstrom zwischen Außenseite und stationären Element 2 noch sicherer zu verhindern, weist die Außenseite des Kolbenelements 5 eine Labyrinthdichtung sowie einen Kolbenring auf als Dichtungen 11 auf. Diese Dichtungen 11 finden sich naturgemäß im Bereich der Außenseite, der auch bei Geschlossenstellung nicht aus dem Hohlraum 4 des stationären Elements 2 heraus bewegt wird, damit zuverlässig ein Durchfluss des Fluidstroms zwischen Außenseite und stationärem Element 2 verhindert wird.

Ferner kennzeichnet das Kolbenelement 5 die Kontaktkante 8 und die gegenüberliegende Rückwand 9. Die Kontaktkante 8 ist abgerundet, um einen Linienkontakt mit dem Ventilsitz zu erreichen und diesen zuverlässig zu verschließen. Ferner befindet sich die Kontaktkante 8 auf einer Wulst des Kolbenelements 5, wodurch eine zusätzliche Absicherung des Ventils in der Geschlossenstellung erfolgt. Die Rückwand 9 weist 4 Durchgänge auf, welche symmetrisch um die Verbindungstelle von Rückseite des Kolbenelements 5 und Koppelelement 6 angeordnet sind. Dies ermöglicht einen Druckausgleich des Bereiches innerhalb des topfförmigen Kolbenelements 5 und dem Hohlraum 4 zwischen der Rückseite des Kolbenelements 5 und dem stationären Element 2.

Das Koppelelement 5 der Ventilanordnung 1 ist mittig an der Rückwand 9 des Kolbenelements 5 befestigt und stellt ebenfalls eine zylindrische Form dar. Hierbei ist das Koppelelement 6 mit einer Hartstoffbeschichtung versehen und von einer Stopfbuchspackung 12 umgeben. Die Stopfbuchspackung 12 umfasst Ringe und Buchsen bestehend aus Graphit und Edelstahl. Das stationäre Element 2 weist im Bereich der Stopfbuchspackung 12 einen Einspritzkanal auf, der es ermöglicht Graphitpaste einzuspritzen. Dies erlaubt im Notfall eine vorübergehende Abdichtung, bis eine Instandsetzung erfolgen kann.

Das Koppelelement 5 ist lösbar mit einem elektromechanischen Antrieb 14 verbunden, der das bewegliche Element 3 innerhalb des stationären Elements 2 translatorisch von links nach rechts und zurück bewegen kann. Die Verbindung erfolgt hierbei formschlüssig über eine Einbuchtung 16 an dem Koppelelement 6 und ein entsprechendes Gegenstück am elektromechanischen Antrieb 14.

Das Fluidstromkontrollelement kann bei neuen Strömungsmaschinenanlagen eingesetzt werden, jedoch auch beispielsweise im Rahmen eines Upgrades in bestehende Anlage integriert werden. Die einfache Wartung, die beispielsweise einen einfachen Austausch des elektromechanischen Antriebs 14 im laufenden Betrieb erlaubt, macht auch Instandsetzungsarbeiten an neuen und bestehenden Anlage besonders einfach und erhöht auch die Gesamtsicherheit der Anlagen. So muss im Falle eines Schadens nicht bis zum Herunterfahren der Strömungsmaschinenanlage oder gar zum nächsten Wartungszyklus gewartet werden, sondern der flexible Austausch in kürzester Zeit ermöglicht die Behebung derartiger Schäden ohne weitere Verzögerung. Auch beispielsweise niederdruckhydraulische Antriebe können zumindest vereinfacht repariert werden, da kein zentraler Hochdruckhydraulikkreislauf mehr erforderlich ist für den Betrieb. Vielmehr kann eine separate Niederdruckhydraulik verwendet werden, die nicht mehr die Stilllegung anderer Bestandteile erforderlich macht, sondern auch separat ausgeschaltet und repariert werden kann.

Im Rahmen eines entsprechenden Upgrades wird hierbei einfach zumindest ein Teil des Fluidstromkontrollelements, insbesondere die bestehende Ventilanordnung und der bestehende Antrieb ausgetauscht, wobei eine bestehende Zuleitung einer Hochdruckhydraulik stillgelegt werden kann. Nachfolgend kann über bestehende oder neue Kontrollelektronik eine direkte Regelung erfolgen und im Falle eines Schadens direkt eine Reparatur unabhängig von einem gegebenenfalls noch vorhandenen Hochdruckhydrauliksystems im Rest der Strömungsmaschinenanlage vorgenommen werden. Insbesondere vorteilhaft erwies sich der Austausch des bestehenden Antriebs gegen einen elektromechanischen Antrieb 14, da hierbei beispielsweise komplett auf einen ölbasierten Hydraulikkreislauf verzichtet werden kann, der zusätzliche Anforderungen, Sicherheitsrisiken und einen größeren Platzbedarf mit sich bringt.

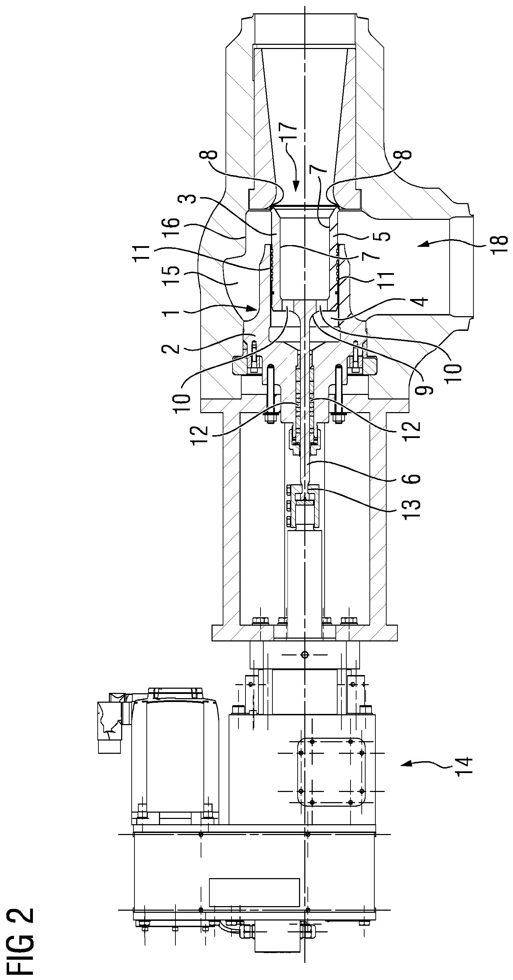

Abbildung 2 zeigt einen schematischen Querschnitt des in Abbildung 1 dargestellten erfindungsgemäßen Fluidstromkontrollelements als 3D-Ansicht.

Abbildung 3 zeigt schematischen Querschnitt eines ähnlichen Fluidstromkontrollelements mit gebräuchlichem Ventilanordnung 1' als Seitenansicht. Auch hierbei weist das Fluidstromkontrollelement eine Einbuchtung 16' im Kolbenraum 15' auf, um vergleichbare Bedingungen zum erfindungsgemäßen Fluidstromkontrollelement bereitzustellen. Abweichend wird jedoch die gebräuchliche Ventilanordnung 1' eingesetzt, dass mittels eines Antriebs 14' basierend auf einer Hochdruckhydraulik das bewegliche Element 3' innerhalb des stationären Elements 2' translatorisch entlang der ersten Achse bewegt und auf den Ventilsitz presst. Insbesondere zur Öffnung der Fluidstromeintrittsöffnung 17' ist hierbei eine große Kraft erforderlich, welche die Hochdruckhydraulik erforderlich macht.

Analog dem in Abbildung 1 dargestellten Fall ist das Fluidstromkontrollelement Bestandteil der Fluidstromleitung 18', welche wiederum ein Bestandteil einer Dampfturbinenanlage als Beispiel einer Strömungsmaschinenanlage ist. Hierbei befindet sich das Fluidstromkontrollelement im Bereich der Fluidstromleitung 18' zwischen dem Dampferzeuger und der Dampfturbine.

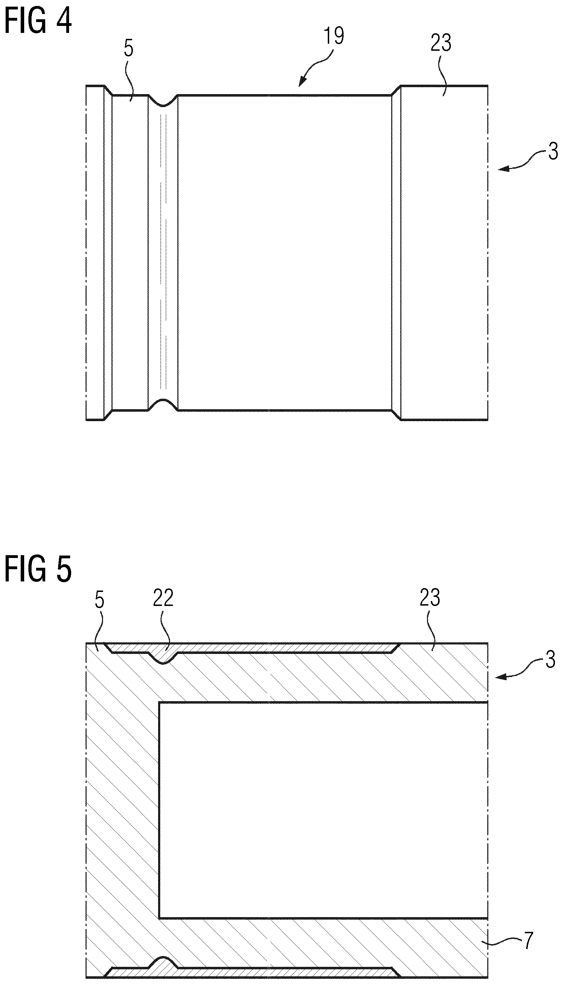

Abbildung 4 zeigt eine schematische Seitenansicht eines Kolbenelements 5 bestehend aus dem zweiten Material 23. Das zweite Material ist in diesem Fall 21CrMoV5-7. Hierbei wurde in das ursprünglich zylindrische Kolbenelement 5 eine Aussparung 19 mittels einen spanenden Fertigungsschrittes eingedreht. Das Kolbenelement 5 ist Bestandteil des in den Abbildungen 1 und 2 dargestellten beweglichen Elements 3.

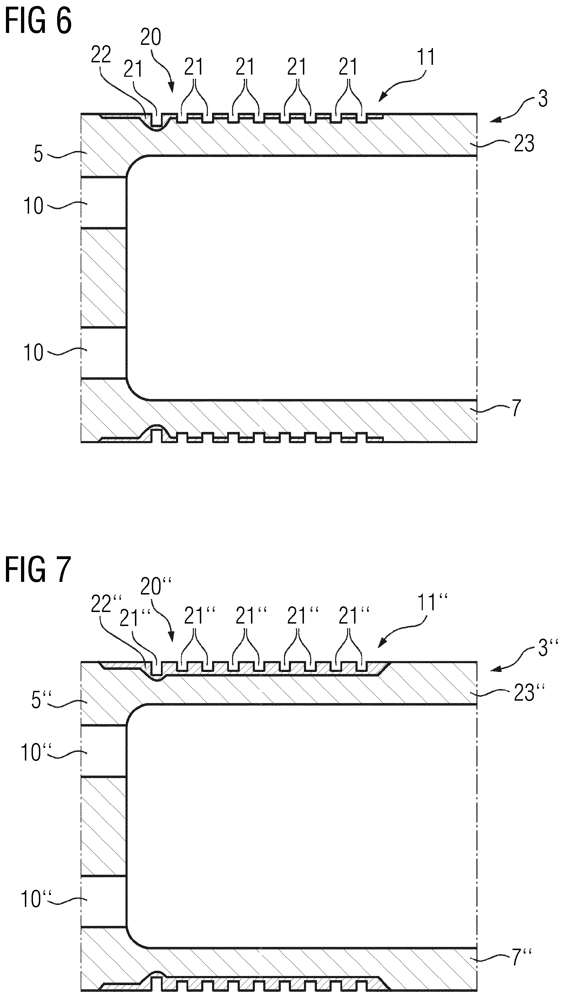

Abbildung 5 zeigt einen schematischen Querschnitt des Kolbenelements 5 aus Abbildung 4 bestehend im Wesentlichen aus dem zweiten Material 23, wobei in die in Abbildung 4 dargestellte Aussparung das erste Material 22 aufgebracht wurde. Das erste Material 22 ist im Fall der Ausführungsform der Abbildung 6 Stellite 6. Hierdurch ergibt sich ein inhomogener Aufbau der Seitenwand 7 des Kolbenelements 5, welches wiederum Bestandteil des beweglichen Elements 3 ist.

Abbildung 6 zeigt einen schematischen Querschnitt des Kolbenelements 5 aus Abbildung 5, wobei in das erste Material 22 und zweite Material 23 die Einbuchtungen 21 mittels eines spanenden Fertigungsschrittes eingebracht wurden. Als spanender Fertigungsschritt wurde Drehen gewählt, wodurch in einfacher Weise gute Ergebnisse erzielt wurden. Die Einbuchtungen stellen das Dichtungselement 20 dar. Hierbei besteht die Dichtung 11 lediglich aus dem Dichtungselement 20.

Die erste Einbuchtung 21 auf der linken Seite erstreckt sich lediglich in das erste Material 22. Die weiteren Einbuchtungen 21 rechts davon erstrecken sich durch das erste Material 22 in das zweite Material 23. Somit besteht die Oberfläche der links angeordneten Einbuchtung 21 aus dem ersten Material 22, während die Oberflächen der weiteren Einbuchtungen 21 aus dem ersten Material 22 und dem zweiten Material 23 bestehen. Alle dargestellten Einbuchtungen 21 erstrecken sich um das Kolbenelement 5 entlang Ebenen parallel zur ersten Achse und sind jeweils 1,1 mm voneinander entfernt. Die Einbuchtung 21 auf der linken Seite mit einer Oberfläche vollständig bestehend aus dem ersten Material 22 weist eine Breite von 0,95mm und eine Tiefe von 1,2 mm auf. Die Einbuchtungen 21 mit Oberflächen bestehend aus dem ersten Material 22 und dem zweiten Material 23 weisen eine Breite von 1,1 mm und eine Tiefe von 0,9 mm auf. Ferner wurde das Innere des Kolbenelements 5 bearbeitet wodurch eine Abrundung im Inneren entstanden ist und die Durchgänge 10 eingefügt wurden.

Die Einbuchtung 21 deren Oberfläche vollständig aus dem ersten Material 22 besteht ist geeignet einen Kolbenring aufzunehmen. Dieser verringert in Verbindung mit den anderen Einbuchtungen 21, welche eine Oberfläche bestehend aus erstem Material 22 und zweitem Material 23 aufweisen und als Labyrinthdichtung dienen, den Durchtritt des Fluids entlang der Außenseite des Kolbenelements 5 auf vernachlässigbare Mengen. Der Kolbenring besteht aus dem ersten Material 22.

Abbildung 7 zeigt einen schematischen Querschnitt des Kolbenelements 5" mit den erfindungsgemäßen Einbuchtungen 21" aus einer alternativen erfindungsgemäßen Ausführungsform. Hierbei erstreckt sich das erste Material 22" tiefer in das Kolbenelement 5" hinein. Dies resultiert darin, dass sich die Einbuchtungen 5" lediglich bis in das erste Material 22" erstrecken und nicht das zweite Material 23" erreichen.

Neben der veränderten Tiefe des ersten Material 22" ist die Ausführungsform der Abbildung 7 analog der in den Abbildungen 4, 5 und 6 dargestellten Ausführungsform. Auch hier stellt das Kolbenelement 5" ein Bestandteil des beweglichen Elements 3" dar. Auch hier erstrecken sich die Einbuchtungen 21" entlang der Außenseite der Seitenwand 7" entlang Ebenen senkrecht zur ersten Achse. Ebenfalls stellt das Dichtungselement 20" die Dichtung 11" dar.

Die vorliegende Erfindung wurde zur Erläuterungszwecken anhand von Ausführungsbeispielen näher beschrieben. Die Erfindung soll jedoch nicht auf die konkrete Ausgestaltung dieser Ausführungsbeispiele beschränkt sein. Vielmehr soll der Schutzbereich der Erfindung lediglich durch die beigefügten Ansprüche beschränkt sein.

## Patentansprüche

1. Ventilanordnung (1, 1') zur Regelung eines Fluidstroms umfassend ein stationäres Element (2, 2') und ein bewegliches Element (3, 3', 3"),
wobei das stationäre Element (2, 2') einen Hohlraum (4) aufweist, in dem sich das bewegliche Element (3, 3', 3") bewegt,
wobei das bewegliche Element (3, 3', 3")geeignet ist entlang einer ersten Achse translatorisch innerhalb des Hohlraums (4) des stationären Elements bewegt zu werden,
wobei das bewegliche Element (3, 3', 3")ein Kolbenelement (5, 5") und eine stabförmiges Koppelelement (6) umfasst, wobei das Kolbenelement (5, 5") eine Außenseite parallel zur ersten Achse aufweist, wobei die Ventilanordnung (1, 1') ein Dichtungselement an der Außenseite des Kolbenelements (5, 5") umfasst, das derart gestaltet ist, dass ein Durchfluss des Fluidstroms zwischen dem stationärem Element und der Außenseite des Kolbenelements (5, 5") verringert oder verhindert wird,
wobei das Kolbenelement (5, 5") eine Kontaktkante (8) aufweist, die geeignet ist einen Ventilsitz zu kontaktieren, wobei das Kolbenelement (5, 5") gegenüber der Kontaktkante (8) eine Rückseite aufweist,
wobei das Koppelelement (6) an der Rückseite des Kolbenelements (5, 5") befestigt ist,
wobei das Dichtungselement derart ausgestaltet ist, dass es mindestens eine Einbuchtung (21, 21") der Außenseite der Seitenwand (7, 7") des Kolbenelements (5, 5") in Richtung der ersten Achse umfasst,
wobei das Kolbenelement (5, 5") eine auf der Seite der Kontaktkante (8) offene Topfform aufweist,
wobei das Kolbenelement (5, 5") gegenüber der Kontaktkante (8) eine Rückwand (9) aufweist, wobei die Rückwand (9) mindestens einen Durchgang (10) aufweist,
**dadurch gekennzeichnet, dass**
die mindestens eine Einbuchtung (21, 21") eine Oberfläche aufweist,
wobei die Oberfläche der mindestens einen Einbuchtung zumindest teilweise aus einem ersten Material (22, 22") besteht, wobei der Großteil des beweglichen Elements (3, 3', 3")aus einem zweiten Material (23, 23") besteht,
wobei das erste Material (22, 22") sich vom zweiten Material (23, 23") unterscheidet, und
wobei das erste Material (22, 22") und das zweite Material (23, 23") aus der Gruppe bestehend aus Metallen und Metalllegierungen ausgewählt wird,
wobei die Oberfläche von mindestens einer Einbuchtung (21, 21") des Dichtungselements (20, 20") vollständig aus dem ersten Material (22, 22") besteht.

2. Ventilanordnung (1, 1') gemäß Anspruch 1, wobei das Dichtungselement (20, 20") mindestens zwei Einbuchtungen (21, 21") aufweist, wobei der Abstand zwischen mindestens zwei Einbuchtungen (21, 21") mindestens 0,7 mm beträgt und/oder wobei die mindestens eine Einbuchtung (21, 21") mindestens eine breite Einbuchtung (21, 21") umfasst, wobei die mindestens eine breite Einbuchtung eine Breite von mindestens 0,9 mm aufweist..

3. Ventilanordnung (1, 1') gemäß einem der Ansprüche 1 bis 2, wobei das Dichtungselement (20, 20") mindestens zwei Einbuchtungen umfasst,
wobei höchstens 10 % der mindestens zwei Einbuchtungen (21, 21") eine Breite von weniger als 0,3 mm aufweist, bezogen auf die Gesamtbreite der mindestens zwei Einbuchtungen.

4. Ventilanordnung (1, 1') gemäß einem der Ansprüche 1 bis 3, wobei die mindestens eine Einbuchtung (21, 21") mindestens eine tiefe Einbuchtung umfasst, wobei die mindestens eine tiefe Einbuchtung eine Tiefe von mindestens 0,8 mm aufweist, basierend auf dem Abstand von einer Gerade entlang der Außenseite des Kolbenelements (5, 5")in einem Querschnitt entlang der ersten Achse gemessen senkrecht zu der Geraden entlang der Außenseite des Kolbenelements (5, 5").

5. Ventilanordnung (1, 1') gemäß einem der Ansprüche 1 bis 4, wobei das erste Material (22, 22") eine höhere Korrosionsbeständigkeit gegenüber dem Fluidstrom aufweist als das zweite Material.

6. Ventilanordnung (1, 1') gemäß einem der Ansprüche 1 bis 5, wobei sich die Kontaktkante (8) auf einer Verdickung des Kolbenelements (5, 5") befindet.

7. Ventilanordnung (1, 1') gemäß einem der Ansprüche 1 bis 6, wobei die Rückseite mindestens einen Durchgang (10) aufweist, wobei der mindestens eine Durchgang (10) den Bereich hinter der Rückseite und den gegenüberliegenden Bereich innerhalb der Kontaktkante (8) verbindet.

8. Fluidstromkontrollelement umfassend eine Ventilanordnung (1, 1') gemäß einem der Ansprüche 1 bis 7, eine Fluidstromleitung und einer Fluidstromeintrittsöffnung (17, 17') umfassend einen Ventilsitz innerhalb der Fluidstromleitung,
wobei der Ventilsitz geeignet ist die Kontaktkante (8) der Ventilanordnung (1, 1') zu kontaktieren.

9. Fluidstromkontrollelement gemäß Anspruch 8, wobei die Ventilanordnung mindestens einen Kolbenring umfasst,
wobei der mindestens eine Kolbenring in mindestens einer Einbuchtung (21, 21") des Kolbenelements (5, 5") angeordnet ist.

10. Fluidstromkontrollelement gemäß Anspruch 9, wobei der Kolbenring aus einem Kolbenringmaterial besteht, wobei das Kolbenringmaterial eine mindestens vergleichbare Korrosionsbeständigkeit in Bezug auf das erste Material (22, 22") aufweist, vorzugsweise wobei das Kolbenringmaterial das erste Material ist.

11. Strömungsmaschinenanlage umfassend mindestens eine Ventilanordnung (1, 1') gemäß einem der Ansprüche 1 bis 7 und/oder ein Fluidstromkontrollelement gemäß einem der Ansprüche 8 bis 10.

12. Verfahren zur Bereitstellung oder Instandsetzung einer Ventilanordnung gemäß einem der Ansprüche 1 bis 7 oder eines Fluidstromkontrollelements gemäß einem der Ansprüche 8 bis 10, wobei das erste Material mittels eines additiven Fertigungsverfahrens wie dem Laserauftragsschweißen auf das zweite Material des beweglichen Elements (3, 3', 3") aufgebracht wird.

13. Verwendung einer Ventilanordnung (1, 1') gemäß einem der Ansprüche 1 bis 7 oder eines Fluidstromkontrollelements gemäß einem der Ansprüche 8 bis 10 zur Bereitstellung einer Strömungsmaschinenanlage, vorzugsweise einer Dampfturbinenanlage.

## Claims

1. A valve arrangement (1, 1') for regulating a fluid flow, comprising a stationary element (2, 2') and a movable element (3, 3', 3"),
wherein the stationary element (2, 2') has a cavity (4) in which the movable element (3, 3', 3") moves,
wherein the movable element (3, 3', 3") is suitable to be moved translationally along a first axis within the cavity (4) of the stationary element,
wherein the movable element (3, 3', 3") comprises a piston element (5, 5") and a rod-shaped coupling element (6),
wherein the piston element (5, 5") has an external side parallel to the first axis, wherein the valve arrangement (1, 1') comprises a sealing element on the external side of the piston element (5, 5") which is configured such that a throughflow of the fluid flow between the stationary element and the external side of the piston element (5, 5") is reduced or prevented,
wherein the piston element (5, 5") has a contact edge (8) which is suitable for contacting a valve seat,
wherein the piston element (5, 5") has a rear side opposite the contact edge (8),
wherein the coupling element (6) is attached to the rear side of the piston element (5, 5"),
wherein the sealing element is designed such that it comprises at least one indentation (21, 21") of the external side of the side wall (7, 7") of the piston element (5, 5") in a direction of the first axis,
wherein the piston element (5, 5") has a pot shape that is open on the side of the contact edge (8),
wherein the piston element (5, 5") has a rear wall (9) opposite the contact edge (8) with the rear wall (9) having at least one passage (10),
**characterised in that**
the at least one indentation (21, 21") has a surface,
wherein the surface of the at least one indentation consists at least partially of a first material (22, 22"), wherein the majority of the movable element (3, 3', 3") consists of a second material (23, 23"),
wherein the first material (22, 22") differs from the second material (23, 23"), and
wherein the first material (22, 22") and the second material (23, 23") are selected from the group consisting of metals and metal alloys,
wherein the surface of at least one indentation (21, 21") of the sealing element (20, 20") consists completely of the first material (22, 22").

2. The valve arrangement (1, 1') according to claim 1, wherein the sealing element (20, 20") has at least two indentations (21, 21"), wherein the distance between at least two indentations (21, 21") is at least 0.7 mm and/or wherein the at least one indentation (21, 21") comprises at least one wide indentation (21, 21"), wherein the at least one wide indentation has a width of at least 0.9 mm.

3. The valve arrangement (1, 1') according to one of the claims 1 to 2, wherein the sealing element (20, 20") has at least two indentations,
wherein at most 10 % of the at least two indentations (21, 21") have a width of less than 0.3 mm based on the total width of the at least two indentations.

4. The valve arrangement (1, 1') according to one of the claims 1 to 3, wherein the at least one indentation (21, 21") comprises at least one deep indentation, wherein the at least one deep indentation has a depth of at least 0.8 mm based on the distance from a straight line along the external side of the piston element (5, 5") in a cross section along the first axis, measured perpendicularly to the straight line along the external side of the piston element (5, 5").

5. The valve arrangement (1, 1') according to one of the claims 1 to 4, wherein the first material (22, 22") has a higher corrosion resistance to the fluid flow than the second material.

6. The valve arrangement (1, 1') according to one of the claims 1 to 5, wherein the contact edge (8) is located on a thickened part of the piston element (5, 5").

7. The valve arrangement (1, 1') according to one of the claims 1 to 6, wherein the rear side has at least one passage (10), wherein the at least one passage (10) connects the area behind the rear side and the opposite area within the contact edge (8).

8. A fluid flow control element, comprising a valve arrangement (1, 1') according to one of the claims 1 to 7, a fluid flow line and a fluid flow inlet opening (17, 17') comprising a valve seat within the fluid flow line, wherein the valve seat is suitable for contacting the contact edge (8) of the valve arrangement (1, 1').

9. The fluid flow control element according to claim 8, wherein the valve arrangement comprises at least one piston ring, wherein the at least one piston ring is arranged in at least one indentation (21, 21") of the piston element (5, 5").

10. The fluid flow control element according to claim 9, wherein the piston ring consists of a piston ring material, wherein the piston ring material has at least a comparable corrosion resistance with respect to the first material (22, 22") with the piston ring material preferably being the first material.

11. A flow machine installation, comprising at least one valve arrangement (1, 1') according to one of the claims 1 to 7 and/or a fluid flow control element according to one of the claims 8 to 10.

12. A method for providing or maintaining a valve arrangement according to one of the claims 1 to 7 or a fluid flow control element according to one of the claims 8 to 10, wherein the first material is applied onto the second material of the moveable element (3, 3', 3") by means of an additive manufacturing method such as laser deposition welding.

13. A use of a valve arrangement (1, 1') according to one of the claims 1 to 7 or a fluid flow control element according to one of the claims 8 to 10 for providing a flow machine installation, preferably a steam turbine installation.

## Revendications

1. Agencement de vanne (1, 1') pour la régulation d'un débit de fluide comprenant un élément fixe (2, 2') et un élément mobile (3, 3', 3"),
dans lequel l'élément fixe (2, 2') comporte une cavité (4) dans laquelle se déplace l'élément mobile (3, 3', 3"),
dans lequel l'élément mobile (3, 3', 3") est apte à se déplacer en translation le long d'un premier axe à l'intérieur de la cavité (4) de l'élément fixe,
dans lequel l'élément mobile (3, 3', 3") comprend un élément de piston (5, 5'') et un élément d'accouplement en forme de tige (6),
dans lequel l'élément de piston (5, 5") présente un côté extérieur parallèle au premier axe, dans lequel l'agencement de vanne (1, 1') comprend un élément d'étanchéité sur le côté extérieur de l'élément de piston (5, 5") qui est conçu de telle sorte qu'un écoulement du flux de fluide entre l'élément fixe et le côté extérieur de l'élément de piston (5, 5") est réduit ou empêché,
dans lequel l'élément de piston (5, 5") présente un bord de contact (8) qui est adapté pour entrer en contact avec un siège de vanne,
dans lequel l'élément de piston (5, 5'') présente un côté arrière opposé au bord de contact (8),
dans lequel l'élément d'accouplement (6) est fixé à l'arrière de l'élément de piston (5, 5"),
dans lequel l'élément d'étanchéité est conçu de telle sorte qu'il comprend au moins une indentation (21, 21") du côté extérieur de la paroi latérale (7, 7") de l'élément de piston (5, 5") dans la direction du premier axe,
dans lequel l'élément de piston (5, 5") présente une forme de pot ouvert du côté du bord de contact (8),
dans lequel l'élément de piston (5, 5") présente une paroi arrière (9) opposée au bord de contact (8), la paroi arrière (9) présentant au moins un passage (10),
**caractérisé en ce que**
l'au moins une indentation (21, 21") a une surface,
dans lequel la surface de l'au moins une indentation est constituée au moins partiellement d'un premier matériau (22, 22''), dans lequel la majorité de l'élément mobile (3, 3', 3") est constituée d'un second matériau (23, 23"),
dans lequel le premier matériau (22, 22") diffère du second matériau (23, 23"), et
dans lequel le premier matériau (22, 22") et le deuxième matériau (23, 23") sont choisis dans le groupe constitué par les métaux et les alliages métalliques,
dans lequel la surface de l'au moins une indentation (21, 21") de l'élément d'étanchéité (20, 20") est entièrement constituée du premier matériau (22, 22").

2. Agencement de vanne (1, 1') selon la revendication 1, dans lequel l'élément d'étanchéité (20, 20") présente au moins deux indentations (21, 21"), la distance entre au moins deux indentations (21, 21") étant d'au moins 0,7 mm et/ou dans lequel au moins une indentation (21, 21") comprend au moins une indentation large (21, 21''), l'au moins une indentation large présentant une largeur d'au moins 0,9 mm.

3. Agencement de vanne (1, 1') selon l'une quelconque des revendications 1 à 2, dans lequel l'élément d'étanchéité (20, 20") comprend au moins deux indentations,
dans lequel au plus 10 % des au moins deux indentations (21, 21") ont une largeur inférieure à 0,3 mm, sur la base de la largeur totale des au moins deux indentations.

4. Agencement de vanne (1, 1') selon l'une quelconque des revendications 1 à 3, dans lequel l'au moins une indentation (21, 21") comprend au moins une indentation profonde, l'au moins une indentation profonde présentant une profondeur d'au moins 0,8 mm, sur la base de la distance par rapport à une ligne droite le long de l'extérieur de l'élément de piston (5, 5") dans une section transversale le long du premier axe mesurée perpendiculairement à la ligne droite le long de l'extérieur de l'élément de piston (5, 5").

5. Agencement de vanne (1, 1') selon l'une quelconque des revendications 1 à 4, dans lequel le premier matériau (22, 22") présente une résistance à la corrosion vis-à-vis de l'écoulement de fluide supérieure à celle du deuxième matériau.

6. Ensemble de vanne (1, 1') selon l'une quelconque des revendications 1 à 5, dans lequel le bord de contact (8) est situé sur un épaississement de l'élément de piston (5, 5").

7. Agencement de vanne (1, 1') selon l'une quelconque des revendications 1 à 6, dans lequel le côté arrière présente au moins un passage (10), l'au moins un passage (10) reliant la zone derrière le côté arrière et la zone opposée à l'intérieur du bord de contact (8).

8. Elément de régulation d'écoulement de fluide comprenant un agencement de vanne (1, 1') selon l'une quelconque des revendications 1 à 7, une conduite d'écoulement de fluide et une ouverture d'entrée d'écoulement de fluide (17, 17') comprenant un siège de vanne à l'intérieur de la conduite d'écoulement de fluide, le siège de vanne étant adapté pour entrer en contact avec le bord de contact (8) de l'agencement de vanne (1, 1').

9. Elément de régulation d'écoulement de fluide selon la revendication 8, dans lequel l'agencement de vanne comprend au moins un segment de piston, l'au moins un segment de piston étant disposé dans au moins une indentation (21, 21") de l'élément de piston (5, 5").

10. Elément de régulation d'écoulement de fluide selon la revendication 9, dans lequel le segment de piston est constitué d'un matériau de segment de piston, dans lequel le matériau de segment de piston présente une résistance à la corrosion au moins comparable par rapport au premier matériau (22, 22''), de préférence dans lequel le matériau de segment de piston est le premier matériau.

11. Système de turbomachine comprenant au moins un agencement de vanne (1, 1') selon l'une quelconque des revendications 1 à 7 et/ou un élément de régulation d'écoulement de fluide selon l'une quelconque des revendications 8 à 10.

12. Procédé de fourniture ou de réparation d'un agencement de vanne selon l'une quelconque des revendications 1 à 7 ou d'un élément de régulation d'écoulement de fluide selon l'une quelconque des revendications 8 à 10, dans lequel le premier matériau est appliqué sur le second matériau de l'élément mobile (3, 3', 3") au moyen d'un procédé de fabrication additive tel que le soudage par dépôt laser.

13. Utilisation d'un agencement de vanne (1, 1') selon l'une quelconque des revendications 1 à 7 ou d'un élément de régulation d'écoulement de fluide selon l'une quelconque des revendications 8 à 10 pour la fourniture d'un système de turbomachine, de préférence un système de turbine à vapeur.
